(19) Europäisches Patentamt
European Patent Office
Office européen des brevets

(11) Veröffentlichungsnummer : **0 096 263**
**B1**

(12) # EUROPÄISCHE PATENTSCHRIFT

(45) Veröffentlichungstag der Patentschrift : **11.12.85**

(51) Int. Cl.[4] : **C 07 F 9/18**, A 01 N 57/10

(21) Anmeldenummer : **83105000.0**

(22) Anmeldetag : **20.05.83**

(54) **Difluormethoxiphenylthiophosphorsäureester.**

(30) Priorität : **28.05.82 DE 3220113**

(43) Veröffentlichungstag der Anmeldung : **21.12.83 Patentblatt 83/51**

(45) Bekanntmachung des Hinweises auf die Patenterteilung : **11.12.85 Patentblatt 85/50**

(84) Benannte Vertragsstaaten : **BE CH DE FR GB IT LI NL**

(56) Entgegenhaltungen :
**EP-A- 0 054 149**
**DE-A- 2 625 764**
**US-A- 3 755 511**

(73) Patentinhaber : **BASF Aktiengesellschaft**
**Carl-Bosch-Strasse 38**
**D-6700 Ludwigshafen (DE)**

(72) Erfinder : **Seufert, Walter, Dr.**
**Laerchenweg 19**
**D-6720 Speyer (DE)**
Erfinder : **Varwig, Juergen, Dr.**
**Am Goetzenberg 1**
**D-6900 Heidelberg (DE)**
Erfinder : **Husslein, Gerd, Dr.**
**Rubensstrasse 36**
**D-6700 Ludwigshafen (DE)**
Erfinder : **Seppelt, Wolfgang, Dr.**
**Lucas-Cranach-Strasse 8**
**D-6712 Bobenheim-Roxheim (DE)**
Erfinder : **Adolphi, Heinrich, Dr.**
**Kalmitweg 11**
**D-6703 Limburgerhof (DE)**

**EP 0 096 263 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Difluormethoxyphenylthiophosphorsäureester, Verfahren zu ihrer Herstellung und Pflanzenschutzmittel, die diese Verbindungen als Wirkstoffe enthalten.

Thiophosphorsäureester sind seit langem als Wirkstoffe bzw. Pflanzenschutzmittel zur Bekämpfung von Schadinsekten, Blattläusen, Milben und ähnlichen tierischen Schädlingen bekannt. Eine zusammenfassende Darstellung findet sich in dem Buch « Chemie der Pflanzenschutz- und Schädlingsbekämpfungsmittel », herausgegeben von R. Wegler, Band 1, S. 246 ff.

Nach der DE-OS 2 625 764 sind O, S-Dialkyl (thio) phosphorsäurephenolester, deren Phenylrest durch die Trifluormethylthiogruppe substituiert ist, besonders gut wirkende Insektizide.

Mehrere, nicht vorveröffentlichte Vorschläge beschäftigen sich mit dem Ersatz dieses Substituenten durch die Trifluormethyl- und die Trifluormethoxygruppe. Hinzuweisen ist in diesem Zusammenhang auf die EP-A-54 149. Nach der US-PS 3 755 511 ist auch die Substitution durch längerkettige, Fluoratome tragende Substituenten ein Mittel zur Wirkungssteigerung besagter Insektizide.

Es wurden nun neue Difluormethoxyphenylthiophosphorsäureester gefunden, die die Aufgabe, Schadinsekten und andere Gliedertiere zu bekämpfen, in besonders vorteilhafter Weise erfüllen.

Die neuen Ester haben die allgemeine Formel I

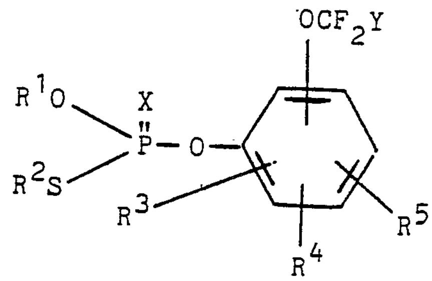

(I)

in der

$R^1$ einen Alkylrest mit bis zu 3 Kohlenstoffatomen,

$R^2$ einen Alkylrest mit 3 bis 5 Kohlenstoffatomen oder einen durch eine Methoxy-, Ethoxy-, Isopropoxy- oder Ethylthiogruppe oder ein Chloratom substituierten Alkylrest mit bis zu 5 Kohlenstoffatomen,

Y ein Wasserstoff- oder Chloratom,

X ein Sauerstoff- oder Schwefelatom und

$R^3$, $R^4$, $R^5$ jeweils ein Wasserstoff- oder Halogenatom oder einen Alkylrest mit bis zu 4 C-Atomen, eine Nitrilgruppe, eine Nitrogruppe oder ein Halogenatom oder eine Alkoxy- oder Alkylthiogruppe mit bis zu 4 C-Atomen sein können.

Die Verbindungen können auf bekannten Wegen hergestellt werden.

So lassen sich O, S-Dialkyl(thio) phosphoresterchloride II mit Phenolen III zu den erfindungsgemäßen Verbindungen umsetzen :

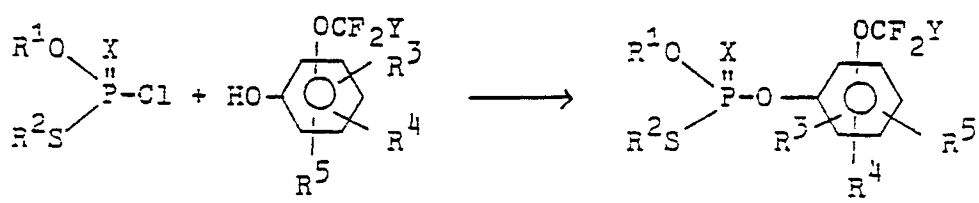

(II) (III) (I)

Die benötigten Phenole III können z. B. aus entsprechenden Anilinen durch Diazotieren und Verkochen hergestellt werden. Ein Weg zur Herstellung der Aniline ist in Z. Naturforschung 28 c, 653-661 (1973) angegeben.

Die unter die Formel III fallenden Difluormethoxyphenole können auch auf einem anderen, besonders wirtschaftlichem Wege hergestellt werden : man kann sie durch Hydrierung entsprechend substituierter Benzylether, die durch Umsetzung von leicht zugänglichen Hydroxyphenyl-benzylethern mit Chlordifluormethan in prinzipiell bekannter Weise [J. Org. Chemistry *25,* 2009 (1960)] in einem Gemisch von Dioxan oder Tetrahydrofuran und wäßriger Alkalilauge bei 40 bis 80 °C gewonnen werden, in einem Lösungsmittel bereits bei 10 bis 40 °C in Gegenwart von Palladium gewinnen.

Die Kernhalogenierung der Phenole kann, falls gewünscht, in allgemein üblicher Weise geschehen.

Die benötigten Phosphoresterchloride sind z. B. aus der DE-AS 2 642 982 oder aus J. Org. Chem. *30,* 3217 (1965) bekannt.

Die Umsetzung von Phosphoresterchlorid und Phenol wird gewöhnlich in einem organischen

Lösungsmittel, wie z. B. Acetonitril, Toluol, Methylethylketon oder in Zwei-Phasen-Systemen wie z. B. Toluol oder Methylenchlorid und Wasser vorgenommen, wobei der Zusatz einer Base wie Kaliumcarbonat, Natriumhydroxid oder eines tertiären Amins empfehlenswert ist.

Anstelle der Base kann natürlich auch ein Salz des Phenols unmittelbar eingesetzt werden. Die Reaktion läuft bei Raumtemperatur oder geringfügig erhöhter Temperatur ab.

Darüber hinaus sind weitere Verfahren zur Gewinnung erfindungsgemäßer Stoffe möglich :

Phosphorigsäureester IV können nach Arbusow mit Sulfenylchloriden zu den Stoffen I (mit X = O) umgesetzt werden :

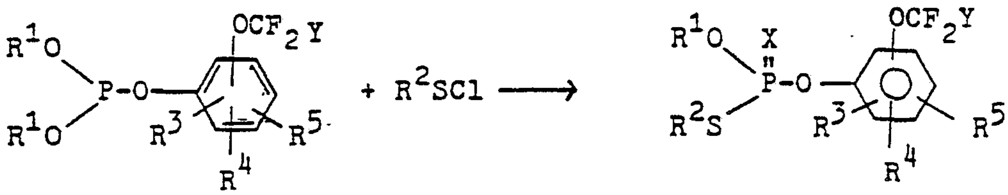

(IV) (I)

Die Salze V, die man z. B. in bekannter Weise (DE-OS 1 955 967) durch Umsetzung entsprechender Diethoxythiophosphorsäurephenolester mit Kaliumhydrogensulfid gewinnt, können nach

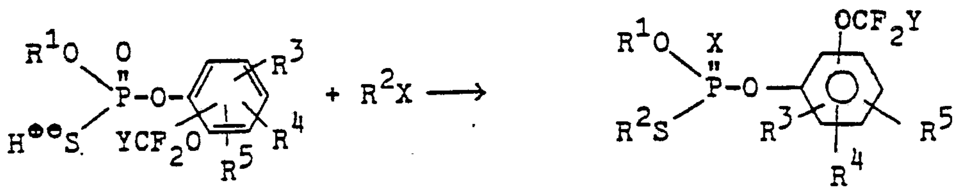

(V) (I)

in Stoffe der Formel I (mit X = O) umgewandelt werden.

Schließlich kann man auch von Phosphoresterchloriden VI ausgehen und diese nacheinander oder gleichzeitig mit einem Alkohol und einem Mercaptan zu den beanspruchten Verbindungen umsetzen :

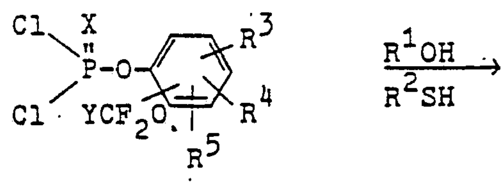


(I)

(VI)

Die Gewinnung der erfindungsgemäßen Stoffe und ihrer Vorprodukte kann mit folgenden Herstellvorschriften verdeutlicht werden, die unter entsprechender Abwandlung auch zur Gewinnung der weiter unten tabellarisch aufgeführten Stoffe verwendet worden sind.

1) 1-Benzyloxy-2-difluormethoxy-benzol

280 g Kaliumhydroxid in 600 ml Wasser wurden zusammen mit 600 ml Dioxan und 300 ml Brenzkatechin-mono-benzylether unter Rühren auf 70 °C gebracht und innerhalb von 2 Stunden 200 g Difluorchlormethan eingeleitet. Nach dem Abkühlen wurde mit einem Liter Wasser verdünnt und mit Methyl-tert.-butylether extrahiert.

Die Destillation ergab 224 g 1-(Benzyloxy)-2-(difluormethoxy)-benzol mit einem Siedepunkt von 135 °C bei 2 mbar.

NMR ($CDCl_3$) [TMS] : 5,07 ppm (2) (S), 6,35 ppm (1) (T)
6,80 ppm — 7,15 ppm (4) Aromat
7,36 ppm (5) Aromat

2) 1-(Benzyloxy)-4-(difluormethoxy)-benzol

Wenn man anstelle von Brenzkatechin-monobenzylether (vgl. Vorschrift 1) den Hydrochinonmonobenzylether einsetzt, so erhält man 1-(Benzyloxy)-4-(difluormethoxy)-benzol mit einem Siedepunkt von 115 bis 120 °C bei 0,2 mbar und einem Schmelzpunkt von 52 bis 55 °C.

NMR ($CDCl_3$) [TMS] : 4,95 ppm (2) (S), 6,32 ppm (1) (T)
6,85 ppm (2) Aromat, 6,95 ppm (2) Aromat,
7,34 ppm (5) Aromat

3) 2-Difluormethoxy-phenol

205 g des nach Vorschrift 1 erhaltenen 1-(Benzyloxy)-2-(difluormethoxy)-benzols wurden in 2 l Ethanol gelöst und bei 15 bis 40 °C unter Verwendung von 5 g eines 10 % Palladium auf Aktivkohle enthaltenden Katalysators unter Rühren bei atmosphärischem Druck hydriert.

Die Destillation ergab 92 g 2-Difluormethoxy-phenol mit einem Siedepunkt von 75 °C bei 20 mbar.

NMR ($CDCl_3$) [TMS] : 5,70 ppm (1) (S), 6,49 ppm (1) (T)
7,02 ppm (3)

4) 4-Difluormethoxyphenol

Wenn man anstelle des Benzylethers der Vorschrift 1 den Benzylether der Vorschrift 2 einsetzt, so gewinnt man 4-Difluormethoxyphenol mit einem Siedepunkt von 68 °C bei 0,5 mbar.

NMR ($CDCl_3$) [TMS] : 5,62 ppm (1) (S), 6,38 ppm (2) Aromat
6,76 ppm (2) Aromat, 6,98 ppm (2) Aromat

## Beispiel 1

Synthese von O-Ethyl-S-propyl-O-(4-difluormethoxyphenyl)-monothiophosphorsäure

Zu 6,0 g 4-Difluormethoxyphenol und 5,1 g Kaliumcarbonat in 100 ml Acetonitril wurde allmählich 6,0 g O-Ethyl-S-propyl-thiophosphoresterchlorid zugesetzt und 3 Stunden bei 50 °C und anschließend 12 Stunden bei Raumtemperatur nachgerührt. Das Lösungsmittel wurde im Rotationsverdampfer entfernt, mit 400 ml Toluol und 100 ml Wasser versetzt, die organische Phase mit 2-normaler Natronlauge und mit Wasser gewaschen, mit Natriumsulfat getrocknet und das Lösungsmittel und flüchtige Verunreinigungen bei 40 °C und 0,1 mbar entfernt. Es wurde als Rückstand 6,5 g eines Öls mit dem Brechungsindex $n_D^{21}$ 1,492 0 erhalten.

Folgende Stoffbeispiele ergaben sich durch entsprechende Abwandlung eines der angegebenen Verfahren :

Tabelle 1

| Beispiel | $-OCF_2Y$ | $R^3R^4R^5$ | $R^1$ | $SR^2$ | X | $n_D$ |
|---|---|---|---|---|---|---|
| 1 | $4-OCF_2Cl$ | H | $C_2H_5$ | 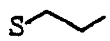 | O | $n_D^{29}$ 1,4870 |
| 2 | " | H | " | 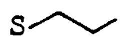 | O | $n_D^{29}$ 1,4862 |
| 3 | " | H | " | 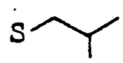 | O | $n_D^{29}$ 1,4832 |
| 4 | " | H | " | 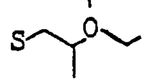 | O | $n_D^{29}$ 1,4845 |
| 5 | " | H | " | 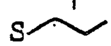 | S | $n_D^{29}$ 1,5095 |
| 6 | " | H | " | 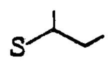 | S | $n_D^{29}$ 1,5130 |
| 7 | " | H | " | 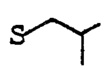 | S | $n_D^{29}$ 1,5110 |
| 8 | " | 2-Cl | " | 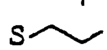 | O | $n_D^{23}$ 1,4983 |
| 9 | " | " | " | 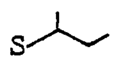 | O | $n_D^{21}$ 1,4971 |
| 10 | " | " | " | 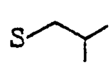 | O | $n_D^{23}$ 1,4941 |
| 11 | " | 2-Br | " | 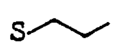 | O | $n_D^{23}$ 1,5100 |
| 12 | " | " | " | 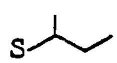 | O | $n_D^{30}$ 1,5032 |
| 13 | " | " | " | 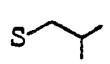 | O | $n_D^{23}$ 1,5042 |
| 14 | " | " | " | 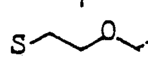 | O | $n_D^{26}$ 1,5045 |
| 15 | " | " | " | 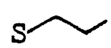 | S | $n_D^{23}$ 1,5350 |
| 16 | " | " | " | 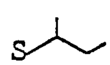 | S | $n_D^{24}$ 1,5361 |
| 17 | $4-OCF_2H$ | H | " | 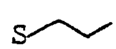 | O | $n_D^{21}$ 1,4920 |

Tabelle 1 (Fortsetzung)

| Beispiel | $-CF_2Y$ | $R^3R^4R^5$ | $R^1$ | $SR^2$ | X | $n_D$ |
|---|---|---|---|---|---|---|
| 18 | " | H | " | 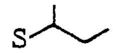 | O | $n_D^{21}$ 1,4913 |
| 19 | " | H | " | 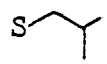 | O | $n_D^{21}$ 1,4890 |
| 20 | " | H | " | 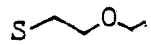 | O | $n_D^{21}$ 1,4895 |
| 21 | " | H | " | 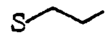 | S | $n_D^{20}$ 1,5210 |
| 22 | " | H | " | 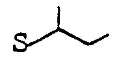 | S | $n_D^{20}$ 1,5190 |
| 23 | " | H | " | 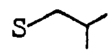 | S | $n_D^{22}$ 1,5162 |
| 24 | " | 2-Cl | " | 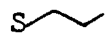 | O | $n_D^{21}$ 1,5014 |
| 25 | " | 2-Cl | " | 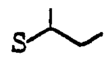 | O | $n_D^{21}$ 1,5002 |
| 26 | " | 2-Cl | " | 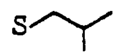 | O | $n_D^{20}$ 1,4989 |
| 27 | " | 2-Cl | " | 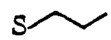 | S | $n_D^{30}$ 1,5250 |
| 28 | " | 2-Cl | " | 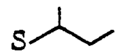 | S | $n_D^{31}$ 1,5272 |
| 29 | " | 2-Br | " | 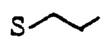 | O | $n_D^{31}$ 1,5075 |
| 30 | " | 2-Br | " | 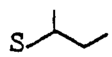 | O | $n_D^{31}$ 1,5078 |
| 31 | " | 2-Br | " | 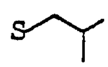 | O | $n_D^{31}$ 1,5004 |
| 32 | " | 2-Br | " | 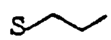 | S | $n_D^{31}$ 1,5365 |
| 33 | " | 2-Br | " | 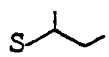 | S | $n_D^{31}$ 1,5398 |
| 34 | " | 2-Br | " | 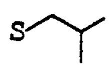 | S | $n_D^{31}$ 1,5376 |
| 35 | $3-OCF_2H$ | H | " | 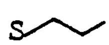 | O | $n_D^{24}$ 1,4900 |
| 36 | " | H | " | 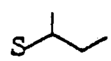 | O | $n_D^{24}$ 1,4880 |
| 37 | " | H | " | 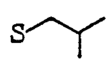 | O | $n_D^{24}$ 1,4878 |
| 38 | " | H | " | 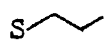 | S | $n_D^{23}$ 1,5219 |
| 39 | $2-OCF_2H$ | H | " | 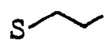 | O | $n_D^{22}$ 1,4890 |
| 40 | " | H | " | 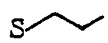 | O | $n_D^{22}$ 1,4875 |
| 41 | " | H | " | 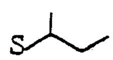 | O | $n_D^{22}$ 1,4868 |

Die in der nachstehenden Tabelle 2 angeführten Stoffe können auf die gleiche Weise wie die vorstehend beschriebenen erhalten werden ; aufgrund ihrer strukturellen Ähnlichkeit kann erwartet werden, daß sie eine vergleichbare Wirksamkeit besitzen.

Tabelle 2

| $YF_2CO$- | $R^3R^4R^5$ | $R^1$ | $SR^2$ | X |
|---|---|---|---|---|
| 4-$OCF_2H$ | H | $CH_3$ | 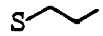 | O |
| " | H | " | 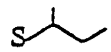 | O |
| 2-$OCF_2H$ | H | " | 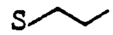 | O |
| " | H | " | 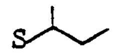 | O |
| 4-$OCF_2H$ | H | " | 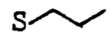 | O |
| " | H | " | 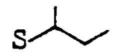 | O |
| 2-$OCF_2Cl$ | H | " | 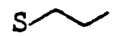 | O |
| " | H | " | 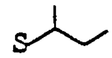 | O |
| 4-$OCF_2H$ | Cl | " | 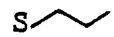 | O |
| " | Cl | " | 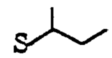 | O |
| 4-$OCF_2Cl$ | 2,6 $Cl_2$ | $C_2H_5$ | 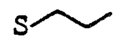 | O |
| " | " | " | 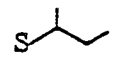 | O |
| " | 2,6 $Br_2$ | " | 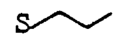 | O |
| " | " | " | 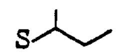 | O |
| 3-$OCF_2Cl$ | H | " | 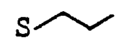 | O |
| " | H | " | 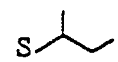 | O |
| " | 4-Cl | " | 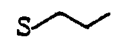 | O |
| " | " | " | 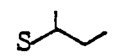 | O |
| " | 4-Br | " | 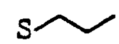 | O |
| " | " | " | 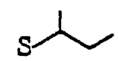 | O |
| 2-$OCF_2Cl$ | H | " | 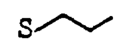 | O |
| " | H | " | 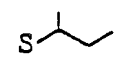 | O |
| " | H | " | 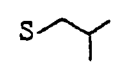 | O |
| 2-$OCF_2Cl$ | H | $C_2H_5$ | 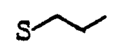 | S |
| " | H | " | 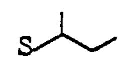 | S |
| " | H | " | 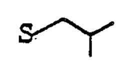 | S |
| " | 4-Cl | " | 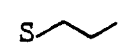 | O |
| " | " | " | 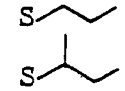 | O |
| " | 4-Br | " | 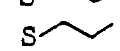 | O |
| " | " | " | 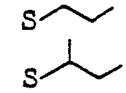 | O |

Tabelle 2 (Fortsetzung)

| $YF_2CO-$ | $R^3R^4R^5$ | $R^1$ | $SR^2$ | X |
|---|---|---|---|---|
| " | 6-Br | " | 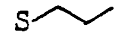 | O |
| " | " | " | 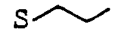 | O |
| " | 4-CN | " | 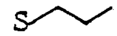 | O |
| 2 | " | " | 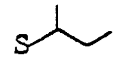 | O |
| 4-$OCF_2H$ | 2,6 $Cl_2$ | " | 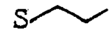 | O |
| " | " | " | 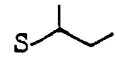 | O |
| " | 2,6 $Br_2$ | " | 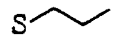 | O |
| " | " | " | 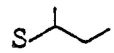 | O |
| 3-$OCF_2H$ | 4-Cl | " | 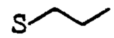 | O |
| " | " | " | 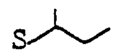 | O |
| " | 4-Br | " | 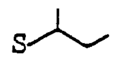 | O |
| " | " | " | 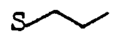 | O |
| " | 4,6 $Cl_2$ | " | 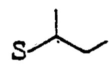 | O |
| " | 4,6 $Br_2$ | " | 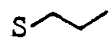 | O |
| 2-$OCF_2H$ | H | " | 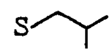 | S |
| " | H | " | 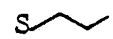 | S |
| " | H | " | 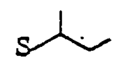 | S |
| " | 4-Cl | " | 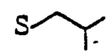 | O |
| 2-$OCF_2H$ | 4-Cl | $C_2H_5$ | 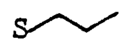 | O |
| " | " | " | 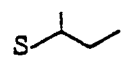 | S |
| " | " | " | 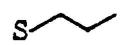 | S |
| " | 6-Cl | " | 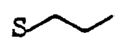 | O |
| " | " | " | 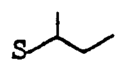 | O |
| " | 4-Br | " | 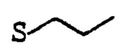 | O |
| " | " | " | 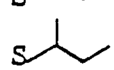 | O |
| " | 6-Br | " | 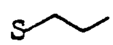 | O |
| " | " | " | 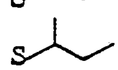 | O |
| " | 4,6 $Cl_2$ | " | 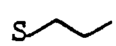 | O |
| " | " | " | 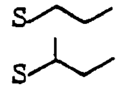 | O |
| " | 4,6 $Br_2$ | " | 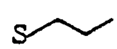 | O |
| " | " | " | 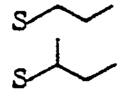 | O |
| " | 4-$CH_3$ | " | 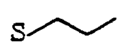 | O |
| " | " | " | 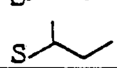 | O |

Zum Vergleich der biologischen Wirkungsdauer der erfindungsgemäßen Stoffe mit herkömmlichen Mitteln wurden die nachstehend aufgeführten ähnlichen Thiophosphorsäureester I, II und III als herkömmliche Mittel verwendet. Die erfindungsgemäßen Mittel weisen in der Regel eine deutlich höhere spezifische Wirkung auf.

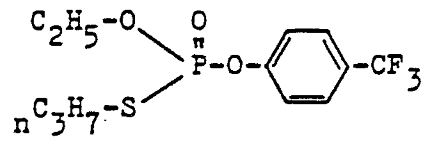

(I)

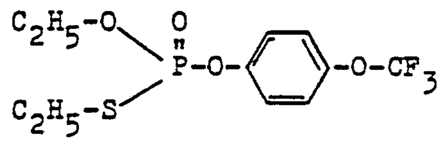

(II)

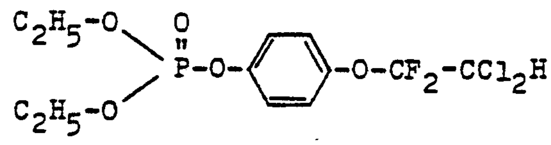

(III)

Kontaktwirkung auf Stubenfliegen (Musca domestica) ; Applikationstest

4 Tage alte Imagines erhalten in leichter $CO_2$-Narkose 1 µl der acetonischen Wirkstofflösung auf das ventrale Abdomen appliziert. Hierzu wird eine Mikrometerspritze verwendet.

Je 20 Versuchstiere mit gleicher Behandlung bringt man in einen Cellophanbeutel (ca. 500 ml).

Nach 4 Stunden zählt man die Tiere in Rückenlage aus und ermittelt graphisch die LD 50.

| | | | | | |
|---|---|---|---|---|---|
| Probe | Nr. | 1 | LD 50 | 0,2 | µg/Fliege |
| " | " | 2 | " | 0,075 | " |
| " | " | 3 | " | 0,11 | " |
| " | " | 5 | " | 0,25 | " |
| " | " | 8 | " | 0,18 | " |
| " | " | 9 | " | 0,081 | " |
| " | " | 10 | " | 0,122 | " |
| " | " | 11 | " | 0,16 | " |
| " | " | 12 | " | 0,1 | " |
| " | " | 13 | " | 0,15 | " |
| " | " | 18 | " | 0,1 | " |
| " | " | 24 | " | 0,075 | " |
| " | " | 25 | " | 0,055 | " |
| " | " | 26 | " | 0,1 | " |
| " | " | 29 | " | 0,14 | " |
| " | " | 30 | " | 0,07 | " |
| " | " | 31 | " | 0,14 | " |
| " | " | 36 | " | 0,11 | " |
| " | " | 37 | " | 0,097 | " |
| " | " | 39 | " | 0,065 | " |
| " | " | 40 | " | 0,1 | " |
| " | " | 41 | " | 0,1 | " |
| Vergleichs-mittel I | | | " | 0,475 | " |

Kontaktwirkung auf Moskito-Larven (Aedes aegypti)

200 ml Leitungswasser werden mit der Wirkstoffaufbereitung versetzt und darauf mit 30 bis 40 Moskito-Larven im 4. Larvenstadium besetzt.

Die Versuchstemperatur beträgt 20 °C. Nach 24 Stunden wird die Wirkung ermittelt.

| | | | | |
|---|---|---|---|---|
| Probe | Nr. | 4 | 0,002 ppm | 100 % Mort. |
| " | " | 5 | 0,01 " | 100 % " |
| " | " | 8 | 0,004 " | 100 % " |
| " | " | 11 | 0,01 " | 100 % " |
| " | " | 12 | 0,01 " | 100 % " |
| " | " | 14 | 0,01 " | 100 % " |
| " | " | 28 | 0,002 " | 100 % " |
| " | " | 29 | 0,001 " | 100 % " |
| " | " | 32 | 0,002 " | 100 % " |
| " | " | 33 | 0,01 " | 100 % " |
| Vergleichsmittel I | | | 0,02 " | 100 % " |
| " | | | 0,01 " | < 80 % " |

Kontaktwirkung auf Baumwollwanze (Dysdercus intermedius)

Petrischalen von 10 cm Durchmesser werden mit 1 ml der azetonischen Wirkstofflösung ausgekleidet.

Nach Verdunsten des Lösungsmittels besetzt man die Schalen mit je 20 Larven des vorletzten Stadiums und registriert die Wirkung nach 24 Stunden.

| | | | | |
|---|---|---|---|---|
| Probe | Nr. | 1 | 0,005 mg | 100 % Mort. |
| " | " | 3 | 0,01 " | 100 % " |
| " | " | 4 | 0,01 " | 100 % " |
| " | " | 5 | 0,01 " | 100 % " |
| " | " | 8 | 0,01 " | 100 % " |
| " | " | 9 | 0,01 " | 100 % " |
| " | " | 10 | 0,004 " | 100 % " |
| " | " | 11 | 0,01 " | 100 % " |
| " | " | 13 | 0,01 " | 100 % " |
| " | " | 17 | 0,004 " | 100 % " |
| " | " | 19 | 0,01 " | 100 % " |
| " | " | 24 | 0,005 " | 100 % " |
| " | " | 25 | 0,005 " | 100 % " |
| " | " | 26 | 0,01 " | 100 % " |
| " | " | 35 | 0,01 " | 100 % " |
| " | " | 37 | 0,01 " | 100 % " |
| " | " | 38 | 0,01 " | 100 % " |
| " | " | 39 | 0,004 " | 100 % " |
| " | " | 40 | 0,004 " | 100 % " |
| " | " | 41 | 0,004 " | 100 % " |
| Vergleichsmittel | | I | 0,004 " | < 80 % " |
| " | | II | 0,02 " | < 80 % " |
| " | | III | 0,1 " | < 80 % " |

Plutella maculipennis ; Kohlschaben-Raupen ; Fraß- und Kontaktwirkung

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

| | | | | | |
|---|---|---|---|---|---|
| Probe | Nr. | 1 | 0,001 % | 100 % | Mort. |
| " | " | 2 | 0,002 % | 100 % | " |
| " | " | 4 | 0,002 % | 100 % | " |
| " | " | 5 | 0,002 % | 100 % | " |
| " | " | 8 | 0,001 % | 100 % | " |
| " | " | 9 | 0,002 % | 100 % | " |
| " | " | 10 | 0,004 % | 100 % | " |
| " | " | 14 | 0,002 % | 100 % | " |
| " | " | 15 | 0,002 % | 100 % | " |
| " | " | 16 | 0,002 % | 100 % | " |
| " | " | 17 | 0,002 % | 100 % | " |
| " | " | 18 | 0,002 % | 100 % | " |
| " | " | 19 | 0,004 % | 100 % | " |
| " | " | 20 | 0,001 % | 100 % | " |
| " | " | 21 | 0,004 % | 100 % | " |
| " | " | 23 | 0,004 % | 100 % | " |
| " | " | 24 | 0,002 % | 100 % | " |
| " | " | 25 | 0,001 % | 100 % | " |
| " | " | 26 | 0,002 % | 100 % | " |
| " | " | 31 | 0,004 % | 100 % | " |
| " | " | 36 | 0,005 % | 100 % | " |
| " | " | 37 | 0,001 % | 100 % | " |
| " | " | 38 | 0,002 % | 100 % | " |
| " | " | 39 | 0,002 % | 100 % | " |
| " | " | 40 | 0,001 % | 100 % | " |
| " | " | 41 | 0,002 % | 100 % | " |
| Vergleichsmittel | | I | 0,01 % | 100 % | " |
| | | | 0,005 % | < 80 % | " |
| " | | II | 0,04 % | 100 % | " |
| | | | 0,02 % | < 80 % | " |
| " | | III | 0,04 % | ca. 80 % | " |

Kontaktwirkung auf Blattläuse (Aphis fabae) Spritzversuch

Getopfte Bohnenpflanzen (Vicia faba) mit starken Blattlauskolonien werden in der Spritzkammer mit den wäßrigen Wirkstoffaufbereitungen tropfnaß gespritzt.

Die Auswertung erfolgt nach 24 Stunden.

(Siehe Tabelle Seite 11 f.)

| | | | | |
|---|---|---|---|---|
| Probe | Nr. | 1 | 0,01 % | 100 % Mort. |
| " | " | 2 | 0,01 % | 100 % " |
| " | " | 3 | 0,01 % | 100 % " |
| " | " | 4 | 0,01 % | 100 % " |
| " | " | 8 | 0,01 % | 100 % " |
| " | " | 9 | 0,01 % | 100 % " |
| " | " | 10 | 0,002 % | 100 % " |
| " | " | 12 | 0,01 % | 100 % " |
| " | " | 17 | 0,01 % | 100 % " |
| " | " | 18 | 0,01 % | 100 % " |
| " | " | 19 | 0,002 % | 100 % " |
| " | " | 20 | 0,01 % | 100 % " |
| " | " | 21 | 0,01 % | 100 % " |
| " | " | 23 | 0,01 % | 100 % " |
| " | " | 24 | 0,001 % | 100 % " |
| " | " | 25 | 0,002 % | 100 % " |
| " | " | 26 | 0,001 % | 100 % " |
| " | " | 27 | 0,01 % | 100 % " |
| " | " | 31 | 0,004 % | 100 % " |
| " | " | 35 | 0,01 % | 100 % " |
| " | " | 36 | 0,005 % | 100 % " |
| " | " | 37 | 0,01 % | 100 % " |
| " | " | 41 | 0,01 % | 100 % " |
| Vergleichsmittel | | I | 0,02 % | 100 % " |
| | | | 0,01 % | < 60 % " |
| " | | II | 0,1 % | 80 % " |
| " | | III | 0,1 % | < 80 % ". |

Wirkung auf Spinnmilben (Tetranychus telarius)

Getopfte Buschbohnen, die das erste Folgeblattpaar entwickelt haben und einen starken Besatz aller Stadien der Spinnmilbe Tetranychus telarius tragen, werden in der Spritzkabine mit der wäßrigen Wirkstoffaufbereitung tropfnaß gespritzt. Die Pflanzen werden dazu auf einen Drehteller gestellt und von allen Seiten mit je 50 ml Spirtzbrühe besprüht. Der Sprühvorgang dauert ca. 22 Sekunden.

Nach 8 Tagen werden die Pflanzen auf lebende Spinnmilben untersucht.

| | | | | |
|---|---|---|---|---|
| Probe | Nr. | 3 | 0,02 % | 100 % Mort. |
| " | " | 4 | 0,02 % | 100 % " |
| " | " | 5 | 0,02 % | 100 % " |
| " | " | 6 | 0,02 % | 100 % " |
| " | " | 7 | 0,02 % | 100 % " |
| " | " | 9 | 0,02 % | 100 % " |
| " | " | 10 | 0,02 % | 100 % " |
| " | " | 11 | 0,01 % | 100 % " |
| " | " | 12 | 0,01 % | 100 % " |
| " | " | 13 | 0,004 % | 100 % " |

(Fortsetzung)

| | | | | | |
|---|---|---|---|---|---|
| Probe | Nr. | 14 | 0,02 % | 100 % | Mort. |
| " | " | 15 | 0,02 % | 100 % | " |
| " | " | 18 | 0,02 % | 100 % | " |
| " | " | 20 | 0,02 % | 100 % | " |
| " | " | 22 | 0,02 % | 100 % | " |
| " | " | 25 | 0,005 % | 100 % | " |
| " | " | 26 | 0,02 % | 100 % | " |
| " | " | 27 | 0,02 % | 100 % | " |
| " | " | 28 | 0,01 % | 100 % | " |
| " | " | 29 | 0,02 % | 100 % | " |
| " | " | 30 | 0,02 % | 100 % | " |
| " | " | 31 | 0,01 % | 100 % | " |
| " | " | 32 | 0,01 % | 100 % | " |
| " | " | 33 | 0,02 % | 100 % | " |
| " | " | 34 | 0,02 % | 100 % | " |
| " | " | 37 | 0,02 % | 100 % | " |
| " | " | 39 | 0,02 % | 100 % | " |
| " | " | 41 | 0,02 % | 100 % | " |
| Vergleichsmittel | | I | 0,1 % | < 50 % | " |
| " | | II | 0,1 % | < 50 % | " |
| " | | III | 0,1 % | < 50 % | " |

Kontaktwirkung auf Zecken (Ornithodorus moubata)

Die Prüfung erfolgt an jungen Zecken, die erst einmal Blut aufgenommen haben. Je 5 Tiere werden in einen handelsüblichen Tee-Kochbeutel 5 Sekunden in die wäßrige Wirkstoffaufbereitung getaucht. Der Beutel wird frei aufgehängt. Nach 48 Stunden ermittelt man die Mortalitätsrate.

Die Versuchstemperatur beträgt 25 bis 26 °C.

| | | | | | |
|---|---|---|---|---|---|
| Probe | Nr. | 2 | 0,01 % | 100 % | Mort. |
| " | " | 3 | 0,02 % | 100 % | " |
| " | " | 4 | 0,0004 % | 100 % | " |
| " | " | 10 | 0,01 % | 100 % | " |
| " | " | 13 | 0,01 % | 100 % | " |
| " | " | 18 | 0,01 % | 100 % | " |
| " | " | 19 | 0,04 % | 100 % | " |
| " | " | 20 | 0,001 % | 100 % | " |
| " | " | 24 | 0,02 % | 100 % | " |
| " | " | 25 | 0,004 % | 100 % | " |
| " | " | 26 | 0,005 % | 100 % | " |
| " | " | 28 | 0,004 % | 100 % | " |
| " | " | 29 | 0,04 % | 100 % | " |
| " | " | 30 | 0,004 % | 100 % | " |
| " | " | 31 | 0,004 % | 100 % | " |

(Fortsetzung)

| | | | | |
|---|---|---|---|---|
| Probe Nr. | 35 | 0,04 % | 100 % Mort. |
| " " | 36 | 0,004 % | 100 % " |
| " " | 37 | 0,004 % | 100 % " |
| " " | 39 | 0,01 % | 100 % " |
| " " | 40 | 0,01 % | 100 % " |
| " " | 41 | 0,001 % | 100 % " |
| Vergleichsmittel | I | 0,1 % | < 50 % " |
| " | II | 0,1 % | < 50 % " |
| " | III | 0,1 % | < 50 % " |

Wirkung auf Wurzelgallennematoden (Meloidogyne incognita)

Je 300 g Komposterde, die stark mit Nematoden infiziert sind, werden mit 30 ml der wäßrigen Wirkstoffaufbereitung innig vermischt und in Plastiktöpfe gefüllt. Darauf bepflanzt man die Töpfe mit Tomatensetzlingen und hält diese unter Gewächshausbedingungen bei 22 bis 24 °C.

Nach 6 bis 8 Wochen untersucht man die Wurzeln auf Gallenbildung.

| | | | | |
|---|---|---|---|---|
| Probe Nr. | 2 | 0,025 % | keine | Gallenbildung |
| " " | 4 | 0,04 % | geringe | " |
| " " | 6 | 0,04 % | keine | " |
| " " | 8 | 0,1 % | " | " |
| " " | 9 | 0,1 % | " | " |
| " " | 10 | 0,1 % | " | " |
| " " | 12 | 0,1 % | " | " |
| " " | 13 | 0,1 % | " | " |
| " " | 14 | 0,1 % | " | " |
| " " | 15 | 0,1 % | " | " |
| " " | 16 | 0,1 % | " | " |
| " " | 17 | 0,005 % | geringe | " |
| " " | 18 | 0,005 % | keine | " |
| " " | 19 | 0,025 % | " | " |
| " " | 20 | 0,02 % | " | " |
| " " | 21 | 0,04 % | " | " |
| " " | 22 | 0,1 % | " | " |
| " " | 23 | 0,1 % | " | " |
| " " | 24 | 0,025 % | " | " |
| " " | 25 | 0,025 % | " | " |
| " " | 26 | 0,025 % | " | " |
| " " | 30 | 0,02 % | " | " |
| " " | 33 | 0,1 % | " | " |
| " " | 36 | 0,025 % | " | " |
| " " | 37 | 0,025 % | " | " |
| " " | 38 | 0,05 % | " | " |
| " " | 39 | 0,04 % | " | " |
| " " | 40 | 0,01 % | " | " |
| " " | 41 | 0,01 % | " | " |
| Vergleichsmittel | II | 0,1 % | starke | Vergallung |
| " | III | 0,1 % | " | " |

**Patentansprüche**

1. Difluormethoxyphenylthiophosphorsäureester der Formel I

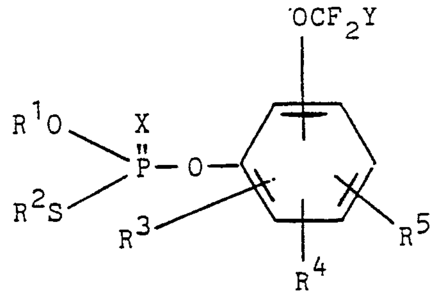

(I)

in der

$R^1$ einen Alkylrest mit bis zu 3 Kohlenstoffatomen,

$R^2$ einen Alkylrest mit 3 bis 5 Kohlenstoffatomen oder einen durch eine Methoxy-, Ethoxy-, Isopropoxy- oder Ethylthiogruppe oder ein Chloratom substituierten Alkylrest mit bis zu 5 Kohlenstoffatomen,

Y ein Wasserstoff- oder Chloratom,

X ein Sauerstoff- oder Schwefelatom und

$R^3$, $R^4$, $R^5$ jeweils ein Wasserstoff- oder Halogenatom, eine Nitril-, Alkoxy- oder Alkylthiogruppe mit jeweils bis zu 4 C-Atomen oder einen gegebenenfalls substituierten Alkylrest mit bis zu 4 C-Atomen bedeuten.

2. Verfahren zur Herstellung von Estern gemäß Anspruch 1, dadurch gekennzeichnet, daß man entsprechende O, S-Dialkylthiophosphoresterchloride der Formel II

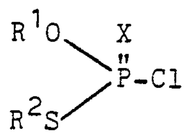

(II)

in der X, $R^1$ und $R^2$ die in Anspruch 1 angegebene Bedeutung haben, mit Difluormethoxyphenolen der Formel III

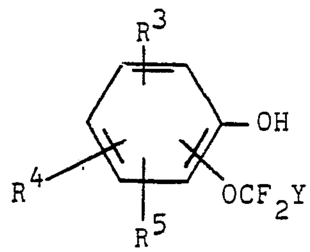

(III)

in der Y, $R^3$, $R^4$ und $R^5$ die in Anspruch 1 angegebene Bedeutung haben, in Gegenwart von säurebindenden Mitteln und vorzugsweise in Gegenwart eines Verdünnungsmittels umsetzt.

3. Pflanzenschutzmittel, enthaltend eine Verbindung gemäß Anspruch 1 in wirksamer Menge.

4. Verwendung des Mittels gemäß Anspruch 3 zur Bekämpfung von Insekten und anderen Gliedertieren.

**Claims**

1. A difluoromethoxyphenyl thiophosphate of the formula I

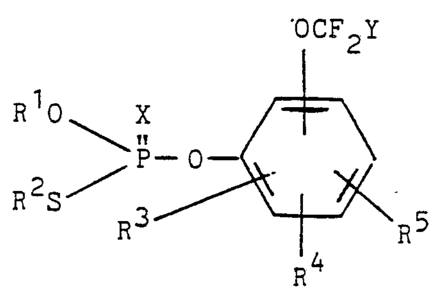

(I)

where

$R^1$ is alkyl of up to 3 carbon atoms,

$R^2$ is unsubstituted alkyl of 3 to 5 carbon atoms or alkyl of up to 5 carbon atoms, which is substituted by methoxy, ethoxy, isopropoxy, ethylthio or chlorine,

Y is hydrogen or chlorine,

X is oxygen or sulfur and

$R^3$, $R^4$ and $R^5$ are each hydrogen, halogen, nitrile, or alkoxy or alkylthio, each of up to 4 carbon atoms, or an optionally substituted alkyl of up to 4 carbon atoms.

2. A process for the manufacture of an ester as claimed in claim 1, wherein a corresponding O, S-dialkylthiophosphoric ester chloride of the formula II

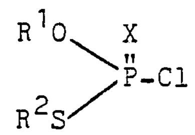

(II)

where X, $R^1$ and $R^2$ have the meanings given in claim 1, is reacted with a difluoromethoxyphenol of the formula III

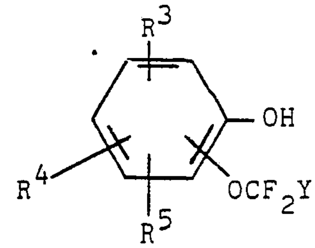

(III)

where Y, $R^3$, $R^4$ and $R^5$ have the meanings given in claim 1, in the presence of an acid acceptor and preferably in the presence of a diluent.

3. A crop protection agent containing an effective amount of a compound as claimed in claim 1.

4. The use of the agent claimed in claim 3 for combating insects and other arthropods.

**Revendications**

1. Esters d'acide difluorométhoxyphénylthiophosphorique de formule I

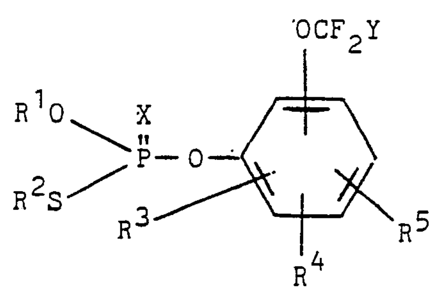

(I)

dans laquelle

$R^1$ est un reste alkyle ayant jusqu'à 3 atomes de carbone,

$R^2$ représente un reste alkyle ayant 3 à 5 atomes de carbone, ou un reste alkyle ayant jusqu'à 5 atomes de carbone, substitué par un groupe méthoxy, éthoxy, isopropoxy, éthylthio ou un atome de chlore,

Y représente un atome d'hydrogène ou de chlore,

X représente un atome d'oxygène ou de soufre et

$R^3$, $R^4$, $R^5$ désignent, chacun, un atome d'hydrogène ou d'halogène, un groupe nitrile, alcoxy ou alkylthio ayant chacun jusqu'à 4 atomes de carbone, ou un reste alkyle, éventuellement substitué, ayant jusqu'à 4 atomes de carbone.

2. Procédé de préparation d'esters selon la revendication 1, caractérisé par le fait que l'on fait réagir, en présence de liants d'acide et de préférence en présence d'un diluant, des chlorures d'ester O, S-dialkylthiophosphorique correspondants de formule II

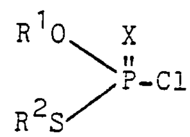

(II)

dans laquelle X, $R^1$ et $R^2$ ont les significations données dans la revendication 1, avec des difluorométhoxyphénols de formule III

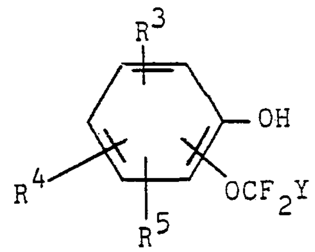

(III)

dans laquelle Y, $R^3$, $R^4$ et $R^5$ ont les significations données dans la revendication 1.

3. Agent de protection des plantes, contenant une quantité efficace d'un composé selon la revendication 1.

4. Utilisation de l'agent selon la revendication 3 pour la lutte contre les insectes et autres articulés.